# EUROPEAN PATENT APPLICATION

(11) **EP 4 723 319 A1**
(43) Date of publication of application: **08.04.2026**
(21) Application number: 23939291.3
(22) Date of filing: 20.11.2023
(51) Int. Cl.: H01M 50/148, H01M 50/169

(54) **HOUSING ASSEMBLY FOR BATTERY AND POWER DEVICE**

(30) Priority: 29.05.2023 CN 202321339813 U
(71) Applicant: BYD Company Limited, Shenzhen, Guangdong 518118 (CN)
(72) Inventor: CHEN, Jiankang, Shenzhen, Guangdong 518118 (CN); LIU, Yanchu, Shenzhen, Guangdong 518118 (CN); MU, Xiaowen, Shenzhen, Guangdong 518118 (CN); MA, Zhiying, Shenzhen, Guangdong 518118 (CN); WANG, Yadong, Shenzhen, Guangdong 518118 (CN)
(74) Representative: Mathys & Squire
(86) International application number: PCT/CN2023/132583
(87) International publication number: WO 2024/244320

(57) **Abstract**

Provided are a shell assembly for a battery, a battery, and a power device. The shell assembly includes: a shell, where a first mating surface and a first end surface are formed on an end portion of the shell, and an included angle between the first mating surface and the first end surface is α1; and a cover plate, where the cover plate covers the end portion of the shell and forms a first surface, a protruding portion protruding toward an interior of the shell is formed on the first surface, and a second mating surface adapted to abut against the first mating surface is formed on the protruding portion. An included angle between the second mating surface and the first surface is α2, and α1 and α2 satisfy: α1<90° and α2>90°.

## Description

### CROSS-REFERENCE TO RELATED APPLICATIONS

This application claims priority to Chinese patent application No. 202321339813.4, filed on May 29, 2023, and entitled "SHELL ASSEMBLY FOR BATTERY, BATTERY, AND POWER DEVICE", which is incorporated herein by reference in its entirety.

### TECHNICAL FIELD

This application relates to the field of batteries, and in particular, to a shell assembly for a battery, a battery, and a power device.

### BACKGROUND

In the related art, an existing steel shell battery is usually integrally stamped. Due to requirements for strength of a bottom cover of the battery, wall thickness of the integrally stamped shell is relatively thick. In order to resolve this problem, the shell and the bottom cover are usually separately welded. When the shell and the bottom cover are combined by welding, welding stability between the shell and the bottom cover is not good, and the shell and the bottom cover easily tilt. Therefore, when the shell and the bottom cover are separately welded, how to enhance the welding stability between the shell and the bottom cover becomes a problem that urgently needs to be resolved in this field.

### SUMMARY

This application is intended to resolve one of technical problems in a related art at least to some extent.

In view of this, an objective of this application is to provide a shell assembly for a battery.

Another objective of this application is to provide a battery including the foregoing shell assembly.

Another objective of this application is to provide a power device including the foregoing battery.

The shell assembly for a battery according to an embodiment of this application includes: a shell, wherein a first mating surface and a first end surface are formed on an end portion of the shell, and an included angle between the first mating surface and the first end surface is α1; and a cover plate, wherein the cover plate covers the end portion of the shell and forms a first surface, a protruding portion protruding toward an interior of the shell is formed on the first surface, and a second mating surface adapted to abut against the first mating surface is formed on the protruding portion; and an included angle between the second mating surface and the first surface is α2, and α1 and α2 satisfy: α1<90° and α2>90°.

In the shell assembly according to the embodiment of this application, the shell and the cover plate are disposed separately, and wall thicknesses of the shell and the cover plate may be thinner. An accommodating cavity for accommodating a battery cell is formed in the shell, and an opening for communicating the accommodating cavity with an exterior of the shell is formed at at least one end of the shell, facilitating assembly, maintenance and replacement of the battery cell. The first mating surface surrounding the opening is formed on the shell, the protruding portion protruding toward the accommodating cavity is formed on the cover plate, the second mating surface adapted to abut against the first mating surface is formed on the protruding portion, and the protruding portion stretches into the opening to implement that the cover plate covers the opening and seals the accommodating cavity. The included angle α1 between the first mating surface and the first end surface and the included angle α2 between the second mating surface and the first surface satisfy: α1<90° and α2>90°, facilitating mating connection between the cover plate and the shell, and increasing the success rate of cover plate-to-shell assembly. The cover plate is connected to an end surface of the shell via the protruding portion, and the connection between the shell and the cover plate is more stable.

In addition, the shell assembly according to the foregoing embodiment of this application may further have the following additional technical features.

According to an example of this application, a second end surface is formed on an end surface of the protruding portion, and an arc transition surface is formed between the second mating surface and the second end surface.

According to an example of this application, the arc transition surface is tangential to both the second mating surface and the second end surface.

According to an example of this application, a radius of the arc transition surface is r and satisfies: 0<r≤0.5 mm.

According to an example of this application, two sides of the shell in a thickness direction are an inner side surface and an outer side surface, and a distance between the inner side surface and the outer side surface is a1; a distance between edges on the two sides of the first mating surface in the thickness direction of the shell is a2; and a1 and a2 satisfy: 0<a2/a1≤0.5.

According to an example of this application, α1 satisfies: 0°<α1≤75°.

According to an example of this application, the first mating surface is in interference fit with the second mating surface.

According to an example of this application, an interference amount between the first mating surface and the second mating surface is a3 and satisfies: 0 mm<a3≤0.2 mm.

According to an example of this application, a distance between the second end surface and an end surface of one side, away from the shell, of the cover plate is h, a thickness of the protruding portion is h1, and h and h1 satisfy: 0.2≤h1/h≤0.6.

According to an example of this application, a wall thickness of the shell is a1 and satisfies: 0.1 mm≤a1≤3 mm.

According to an example of this application, the shell is constructed as a cylinder or a polyhedron.

According to an example of this application, the shell is wound to define the accommodating cavity, a connection area extending in a bus direction is formed on the shell, and a width of the connection area is d and satisfies: d<0.1 mm.

The battery according to an embodiment of this application includes the foregoing shell assembly.

The power device according to this application includes the foregoing battery.

Additional aspects and advantages of this application will be set forth in part in the following description, and in part will become apparent from the following description, or will be understood through the practice of this application.

### BRIEF DESCRIPTION OF THE DRAWINGS

FIG. 1 is a sectional view of a shell assembly according to an embodiment of this application;
FIG. 2 is a sectional view of a shell of a shell assembly according to an embodiment of this application;
FIG. 3 is a partially enlarged view of a circle A in FIG. 2;
FIG. 4 is a sectional view of a cover plate of a shell assembly according to an embodiment of this application;
FIG. 5 is a partially enlarged view of a circle B in FIG. 4;
FIG. 6 is a schematic diagram of connection between a cover plate and a shell of a shell assembly according to an embodiment of this application;
FIG. 7 is a partially enlarged view of a circle D in FIG. 6;
FIG. 8 is a schematic diagram of a structure of a shell of a shell assembly according to an embodiment of this application;
FIG. 9 is a partially enlarged view of a circle C in FIG. 8;
FIG. 10 is an exploded view of a battery according to an embodiment of this application;
FIG. 11 is a schematic diagram of a structure of a battery according to an embodiment of this application;
FIG. 12 is a schematic diagram of connection between a cover plate of a battery and a collector plate according to an embodiment of this application; and
FIG. 13 is a schematic diagram of an inclusion relationship between a battery and a power device according to an embodiment of this application.

### Reference numerals:

shell assembly 1;
battery cell 10; shell 11; cover plate 12;
accommodating cavity 111; opening 112; first mating surface 113; inner side surface 114; outer side surface 115; first end surface 116;
protruding portion 121; second mating surface 122; arc transition surface 123; first surface 124; second end surface 125; connection area 13;
explosion-proof valve 14; second pit 15; collector plate 16; bending connection portion 161;
aluminum block 171; insulating sheet 172; sealing ring 173; top spacer 174; terminal pole 175;
battery 18; power device 19.

### DESCRIPTION OF EMBODIMENTS

Embodiments of this application are described in detail below, examples of which are shown in accompanying drawings, wherein same or similar reference numerals throughout represent same or similar elements or elements having same or similar functions. The embodiments described below with reference to the accompanying drawings are exemplary and are intended to explain this application, and shall not be construed as a limitation on this application.

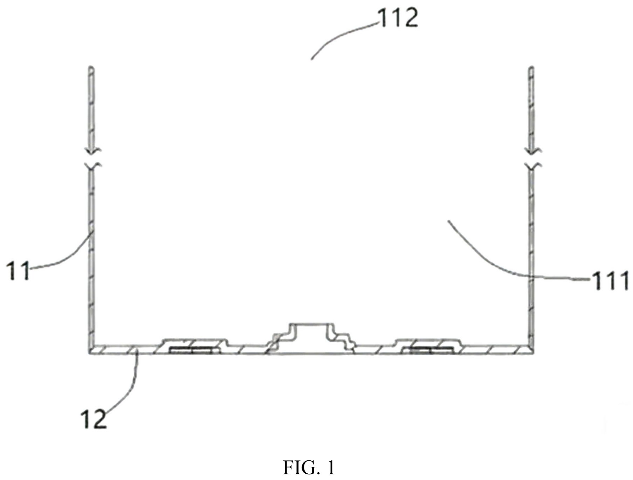

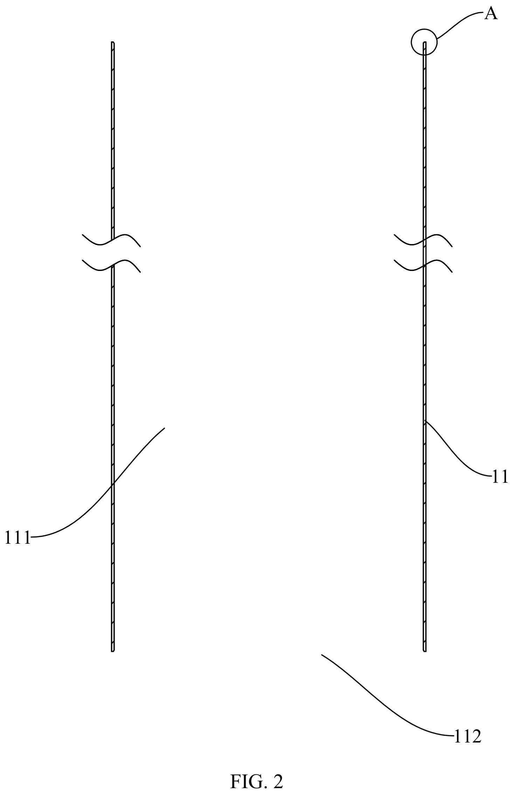

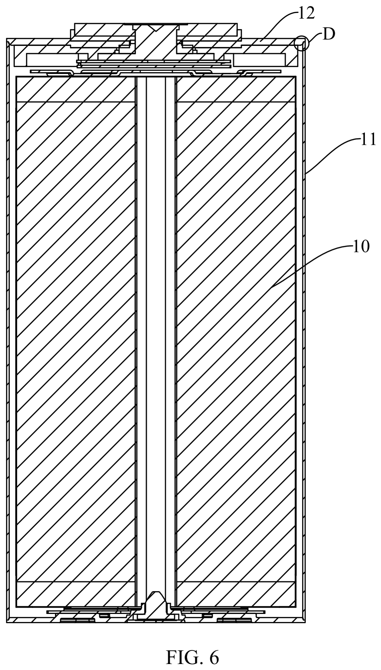

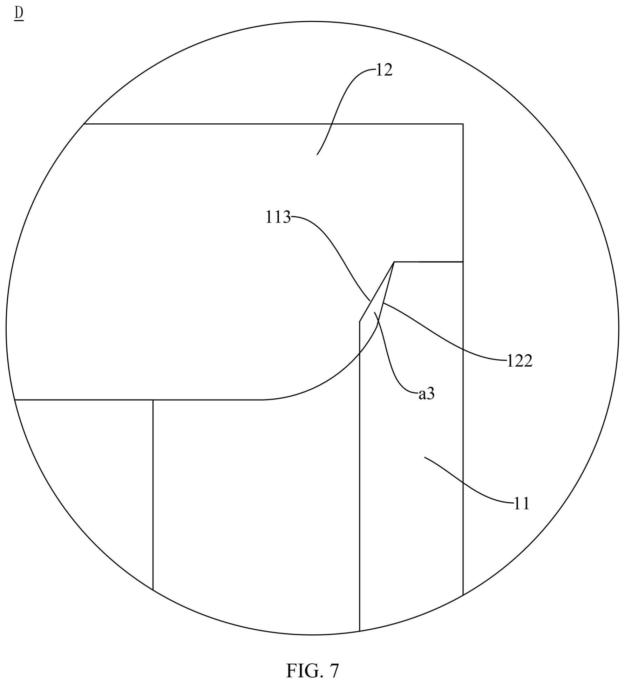

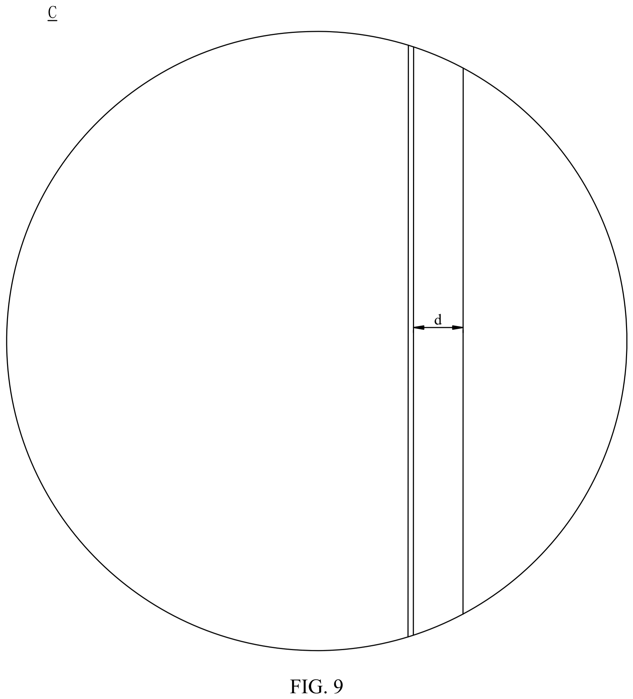

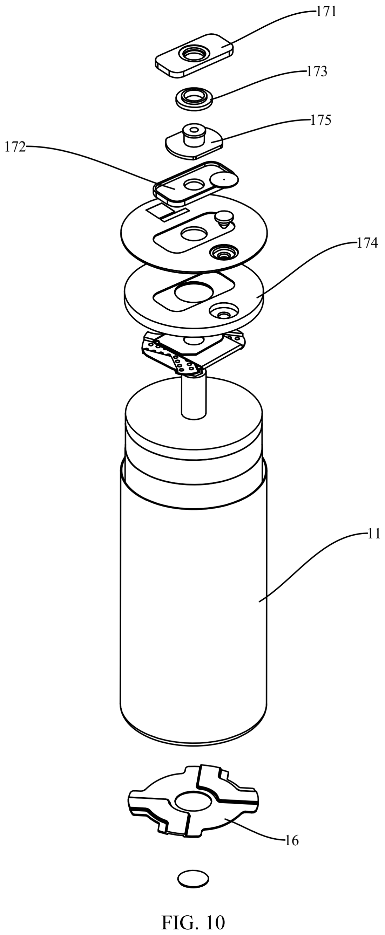

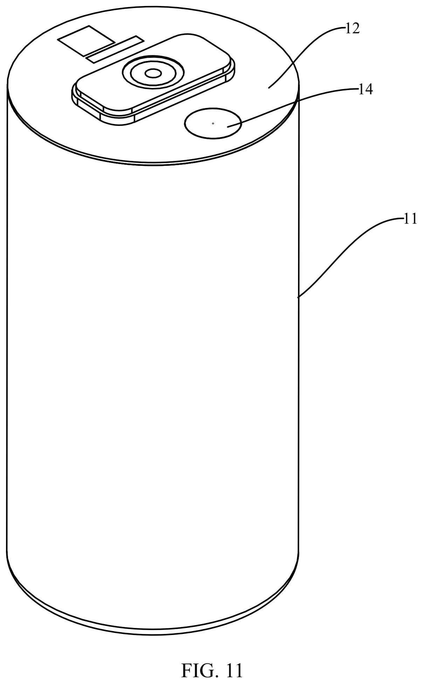

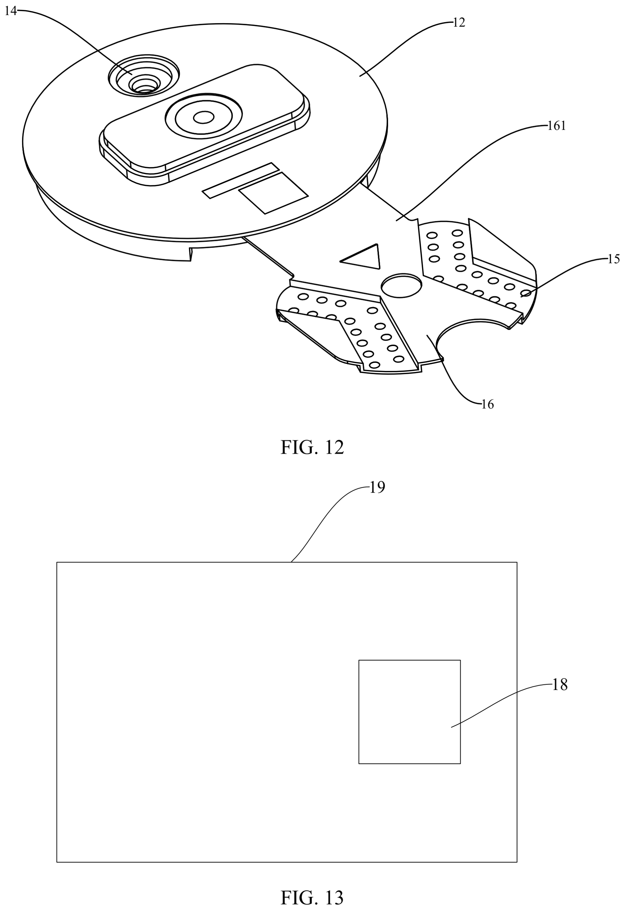

A shell assembly 1 for a battery according to an embodiment of this application is described below with reference to FIG. 1 to FIG. 13.

The shell assembly 1 according to this application includes a shell 11 and a cover plate 12. A first mating surface 113 and a first end surface 116 are formed on an end portion of the shell 11, and an included angle between the first mating surface 113 and the first end surface 116 is α1. The cover plate 12 covers the end portion of the shell 11 and forms a first surface 124, a protruding portion 121 protruding toward an interior of the shell 11 is formed on the first surface 124, and a second mating surface 122 adapted to abut against the first mating surface 113 is formed on the protruding portion 121. An included angle between the second mating surface 122 and the first surface 124 is α2, and α1 and α2 satisfy: α1<90° and α2>90°.

Specifically, the first mating surface 113 and the first end surface 116 are formed on the end portion of the shell 11, the cover plate 12 covers the end portion of the shell 11, the protruding portion 121 protruding toward the interior of the shell 11 is formed on the cover plate 12, the first surface 124 is formed on the cover plate 12, and the second mating surface 122 that abuts against the first mating surface 113 is formed on the protruding portion 121.

The included angle between the first mating surface 113 and the first end surface 116 of the shell 11 is α1 and satisfies: α1<90°. The included angle between the second mating surface 122 and the first surface 124 on the protruding portion 121 is α2 and satisfies: α2>90°. If α1 is a right angle, during fitting of the cover plate 12 and the shell 11, the cover plate 12 may be misplaced, so that the cover plate 12 and the shell 11 are misplaced during assembly and the shell 11 is damaged. A certain angle is formed between the first mating surface 113 and the first end surface 116, and the angle is less than 90 degrees. The first mating surface 113 plays a role of guiding the assembly of the cover plate 12. The second mating surface 122 on the protruding portion 121 of the cover plate 12 abuts against the first mating surface 113, stretches into the opening 112 along the first mating surface 113, and is connected to the shell 11 in a mating manner, facilitating mating connection between the shell 11 and the cover plate 12. In addition, a bevel angle design is used between an end surface of the shell 11 and the first mating surface 113, reducing machining difficulty of the cover plate 12, prolonging a service life of a mold, and effectively reducing costs.

In the shell assembly 1 according to this application, the shell 11 and the cover plate 12 are disposed separately, and wall thicknesses of the shell 11 and the cover plate 12 may be thinner. An accommodating cavity 111 for accommodating a battery cell 10 is formed in the shell 11, and an opening 112 for communicating the accommodating cavity 111 with an exterior of the shell 11 is formed at at least one end of the shell 11, facilitating assembly, maintenance, and replacement of the battery cell 10. The first mating surface 113 surrounding the opening 112 is formed on the shell 11, the protruding portion 121 protruding toward the accommodating cavity 111 is formed on the cover plate 12, the second mating surface 122 adapted to abut against the first mating surface 113 is formed on the protruding portion 121, and the protruding portion 121 stretches into the opening 112 to implement that the cover plate 12 covers the opening 112 and seals the accommodating cavity 111. The included angle α1 between the first mating surface 113 and the first end surface 116 and the included angle α2 between the second mating surface 122 and the first surface 124 satisfy: α1<90° and α2>90°, facilitating the mating connection between the cover plate 12 and the shell 11, and increasing a yield of the cover plate 12 entering the shell. The cover plate 12 is connected to an end surface of the shell 11 via the protruding portion 121, and the connection between the shell 11 and the cover plate 12 is more stable.

According to an embodiment of this application, a second end surface 125 is formed on an end surface of the protruding portion 121, and an arc transition surface 123 is formed between the second mating surface 122 and the second end surface 125.

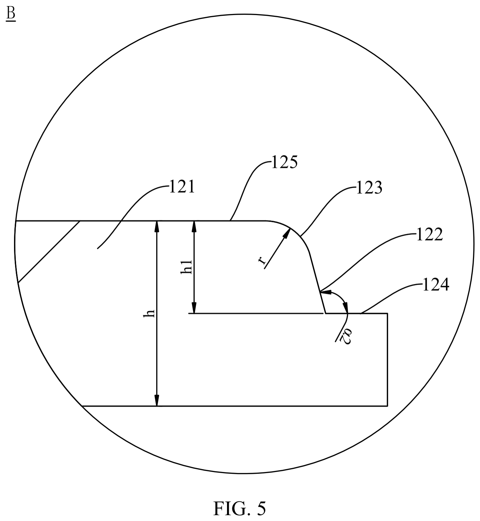

As shown in FIG. 5 to FIG. 7, the second end surface 125 is formed on the end surface of the protruding portion 121, the arc transition surface 123 is formed between the second mating surface 122 and the second end surface 125, and the second end surface 125 and the second mating surface 122 form transition via an arc surface. In a process of assembling the cover plate 12 and the shell 11, under a guiding action of the first mating surface 113, the cover plate 12 may more safely reach into the opening 112 and cover the opening 112, facilitating the assembly of the cover plate 12, and increasing the yield of the cover plate 12 entering the shell.

According to an embodiment of this application, the arc transition surface 123 is tangential to both the second mating surface 122 and the second end surface 125.

As shown in FIG. 5 to FIG. 7, the arc transition surface 123 is tangential to both the second mating surface 122 and the second end surface 125. An outer edge of the arc transition surface 123 is tangential to the second mating surface 122. In a process of abutting the second mating surface 122 against the first mating surface 113, the top of the protruding portion 121 forms arc transition, and is in interference fit with an inner wall of the shell 11, so that the connection between the cover plate 12 and the shell 11 is more stable. An inner edge of the arc transition surface 123 is tangential to the second end surface 125, so that the protruding portion 121 can enter the shell 11 more safely under the guiding action of the first mating surface 113, increasing the yield of the cover plate 12 entering the shell. In addition, the second end surface 125 is tangential to the inner edge of the arc transition surface 123, so that no sharp corner exists on the protruding portion 121, preventing the protruding portion 121 from damaging the battery cell 10, and ensuring the safety of a battery 18.

According to an embodiment of this application, a radius of the arc transition surface 123 is r and satisfies: 0<r≤0.5 mm. The radius r of the arc transition surface 123 satisfies: 0<r≤0.5 mm, facilitating the interference fit between the arc transition surface 123 on the top of the protruding portion 121 and the inner wall of the shell 11,so that the connection between the cover plate 12 and the shell 11 is more stable.

According to an embodiment of this application, two sides of the shell 11 in a thickness direction are an inner side surface 114 and an outer side surface 115, and a distance between the inner side surface 114 and the outer side surface 115 is a1; a distance between edges on the two sides of the first mating surface 113 in the thickness direction of the shell 11 is a2; and a1 and a2 satisfy: 0<a2/a1≤0.5.

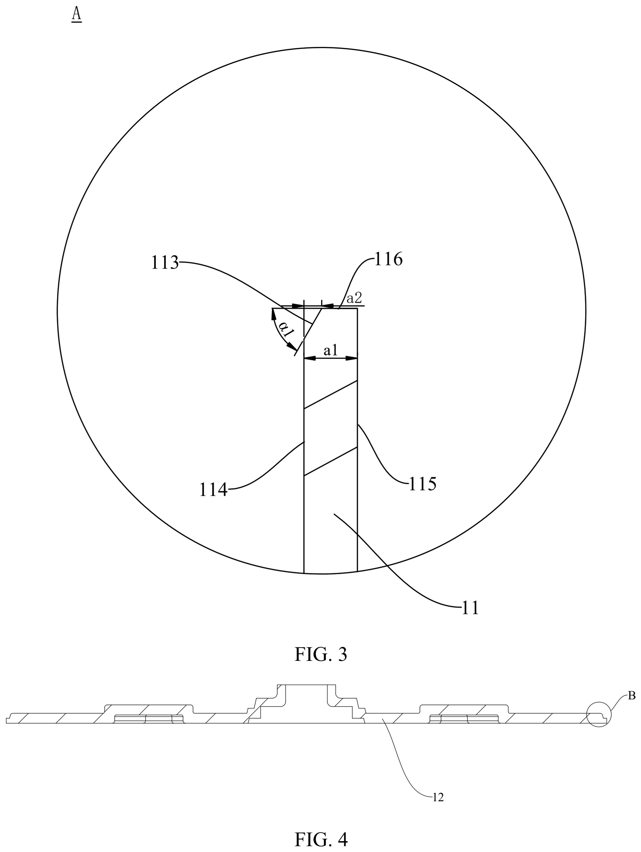

As shown in FIG. 3, a wall thickness of the shell 11 is a1, a bevel angle design is used between the first mating surface 113 and the end surface of the shell 11, and a projection length of the first mating surface 113 in the thickness direction of the shell 11 falls within a range of 0-50% of the wall thickness. On one hand, it is convenient for the first mating surface 113 to provide the guiding action for the cover plate 12 in a process of the cover plate 12 entering the shell, increasing the yield of the cover plate 12 entering the shell. On the other hand, the end surface of the shell 11 is constructed as a bevel angle, which can reduce manufacturing difficulty of the cover plate 12, reduces the costs, and helps to prevent people from being scratched by a right-angled end surface, thereby guaranteeing labor safety.

According to an embodiment of this application, α1 satisfies: 0°<α1≤75°. The included angle α1 between the first mating surface 113 and the first end surface 116 satisfies 0°<α1≤75°, which ensures that the first mating surface 113 plays a guiding role in a process of the cover plate 12 entering the shell, so that the efficiency of the cover plate 12 entering the shell is higher, and the yield of the cover plate 12 entering the shell is increased.

In some embodiments, α2 may satisfy: 90°<α2≤145°. Because the first mating surface 113 and the first end surface 116 on the shell 11 form a bevel angle, the second mating surface 122 is also disposed at a bevel angle, and the included angle between the second mating surface 122 and the first surface 124 is α2 and satisfies: 90°<α2≤145°, facilitating the abutting and interference fit between the second mating surface 122 and the first mating surface 113, increasing the yield of the cover plate entering the shell, reducing the machining difficulty of the cover plate 12, prolonging the service life of the mold, and helping to reduce the costs.

According to an embodiment of this application, the first mating surface 113 is in interference fit with the second mating surface 122. The first mating surface 113 and the second mating surface 122 abut against each other and are in interference fit with each other, improving connection stability of the shell 11 and the cover plate 12. Moreover, after the shell 11 and the cover plate 12 use a form of interference fit, the shell 11 and the cover plate 12 can be welded by vertical welding, and a welding speed of the vertical welding is much higher than that of side welding, greatly shortening the production cycle, reducing the costs. In addition, a risk of laser light transmission in a welding process can be reduced, ensuring welding safety.

According to an embodiment of this application, an interference amount between the first mating surface 113 and the second mating surface 122 is a3 and satisfies: 0 mm<a3≤0.2 mm. Through an interference design, a fitting gap between the first mating surface 113 and the second mating surface 122 is smaller, helping to increase a welding yield.

According to an embodiment of this application, a distance between the second end surface 125 and an end surface of one side, away from the shell 11, of the cover plate 12 is h, a thickness of the protruding portion 121 is h1, and h and h1 satisfy: 0.2≤h1/h≤0.6.

Specifically, the thickness of the protruding portion 121 accounts for 20% to 60% of a total thickness of the cover plate 12, facilitating the assembly of the cover plate 12 and increasing the yield of the cover plate entering the shell. In addition, after the cover plate 12 is assembled, the protruding portion 121 is in interference fit with the inner wall of the shell 11, facilitating fixation of the cover plate 12 and helping to improve the welding stability of the cover plate.

According to an embodiment of this application, the wall thickness of the shell 11 is a1 and satisfies: 0.1 mm≤a1≤3 mm.

In the shell assembly 1 according to this application, the shell 11 and the cover plate 12 are disposed separately and welded, so that the wall thickness of the shell 11 may be thinner. The wall thickness of the shell 11 in this application satisfies 0.1 mm≤a1≤3 mm. Therefore, space utilization of the accommodating cavity 111 of the shell 11 is higher, and a weight of the shell 11 is lower.

According to an embodiment of this application, the shell 11 is constructed as a cylinder or a polyhedron. The shell 11 is constructed as the cylinder and the polyhedron, and after the shell 11 and the cover plate 12 are connected and welded, the welding stability of the shell 11 is higher, and the stability of the battery 18 is higher.

According to an embodiment of this application, the shell 11 is wound to define the accommodating cavity 111, a connection area 13 extending in a bus direction is formed on the shell 11, and a width of the connection area 13 is d and satisfies: d<0.1 mm.

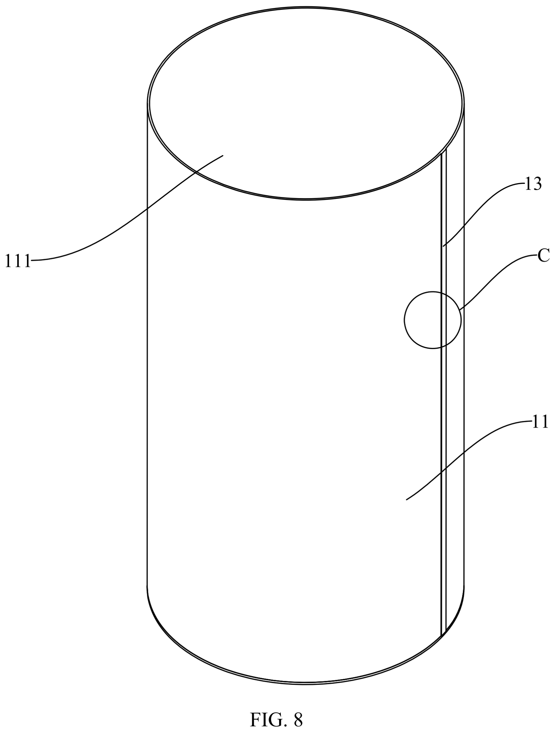

As shown in FIG. 8, the shell 11 is wound to define the accommodating cavity 111, the connection area 13 extending in the bus direction is formed on the shell 11, and the width of the connection area 13 is d and satisfies: d<0.1 mm. A material of the shell 11 is generally stainless steel or other corrosion-resistant steel. The shell 11 is integrally stamped and stretched to form the integrated shell 11, so that the wall thickness of the shell 11 may be thinner, to reduce the weight of the shell 11. The shell 11 is wound to define the accommodating cavity 111. After the shell 11 is wound, the connection area 13 extending in the bus direction is formed on the shell 11, and the width of the connection area 13 is d and satisfies: d < 0.1 mm. The connection area 13 connects the shell 11 into a whole by welding. In this manner, reduction in a welding surplus height of the shell 11 is facilitated. A larger welding surplus height indicates poorer anti-corrosion performance of the shell 11, so that when the width d of the connection area 13 satisfies d < 0.1 mm, the anti-corrosion performance of the shell 11 can be ensured and a service life of the battery 18 can be prolonged.

According to the battery cell 10 and the battery 18 in some embodiments, an aluminum block 171, an insulating sheet 172, a sealing ring 173, and a top spacer 174 are assembled on the cover plate 12 at one end of the shell 11. After the aluminum block 171 is formed by stamping, a terminal pole 175 is riveted to the aluminum block 171, the sealing ring 173 is compressed to seal the cover plate 12, and then the terminal pole 175 and the aluminum block 171 are welded by laser welding, facilitating improvement on the bonding strength of the aluminum block 171 and the terminal pole 175. The top spacer 174 and the insulating sheet 172 are both made of an insulating material to prevent the battery cell 10 from short-circuiting.

In some embodiments, a liquid injection hole 14 is formed in the cover plate 12, a collector plate 16 is disposed in the accommodating cavity 111, second pits 15 facing a tab of the battery cell 10 are formed in the collector plate 16, and the collector plate 16 and the cover plate 12 are connected via a bending connection portion 161. After the collector plate 16 and the tab are welded via the second pits 15, the collector plate 16 can be connected to the cover plate 12 via the bending connection portion 161, reducing the number of parts and improving the degree of integration of the parts. Meanwhile, the bending connection portion 161 is disposed, so that damage to the collector plate 16 can be avoided due to excessive concentration of stress during bending, thereby improving the bending resistance of the collector plate 16, and increasing the bending toughness of the collector plate 16. Therefore, breakage of the collector plate 16 during use of the battery 18 is avoided, and the stability during use of the battery 18 is enhanced.

A battery 18 in this application is briefly described below.

The battery 18 according to this application includes the shell assembly 1 described in any one of the foregoing embodiments. Because the battery 18 according to this application includes the shell assembly 1 described in any one of the foregoing embodiments, the shell 11 and the cover plate 12 in the battery 18 according to this application are disposed separately and welded. Therefore, the wall thickness of the shell 11 of the battery 18 is thinner, the space utilization of the battery 18 is higher, the welding stability of the shell 11 and the cover plate 12 is higher, and the safety of the battery 18 is better.

A power device 19 according to this application is briefly described below.

The power device 19 according to this application includes the battery 18 described in any one of the foregoing embodiments. Because the power device 19 according to this application includes the battery 18 described in any one of the foregoing embodiments, the connection between the shell 11 and the cover plate 12 of the battery 18 in the power device 19 according to this application is safe and stable, and the safety of the power device 19 is higher. The power device 19 may be a vehicle.

In the description of this application, it will be understood that orientations or positional relationships indicated by terms such as "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" are orientations or positional relationships shown in the accompanying drawings, are merely intended to facilitate describing this application and simplifying the description, and do not indicate or imply that an apparatus or component referred to must have specific orientations and be constructed and operated based on the specific orientations, and therefore cannot be construed as limitation on this application.

In the description of this application, "a first feature" and "a second feature" may include one or more features.

In the description of this application, "a plurality of" means two or more.

In the description of this application, a first feature being "above" or "below" a second feature may include direct contact between the first feature and the second feature, or indirect contact between the first feature and second feature through another feature therebetween.

In the description of this application, the first feature being "over", "above", and "higher than" the second feature includes the first feature being directly above or obliquely above the second feature, or merely indicates that a horizontal height of the first feature is greater than that of the second feature.

In the description of this specification, descriptions referring to the terms "one embodiment", "some embodiments", "exemplary embodiments", "examples", "specific examples" or "some examples" mean that specific features, structures, materials or characteristics described in combination with this embodiment or example are included in at least one embodiment or example of this application. In this specification, illustrative expressions of the foregoing terms do not necessarily mean the same embodiment or example. Furthermore, the described specific features, structures, materials or characteristics may be combined in a suitable manner in any one or more embodiments or examples.

Although the embodiments of this application have been shown and described, those of ordinary skill in the art can understand that many changes, modifications, substitutions and variations can be made to these embodiments without departing from the principles and purposes of this application, and the scope of this application is defined by the claims and their equivalents.

## Claims

1. A shell assembly (1) for a battery, comprising:
a shell (11), wherein a first mating surface (113) and a first end surface (116) are formed on an end portion of the shell (11), and an included angle between the first mating surface (113) and the first end surface (116) is α1; and
a cover plate (12), wherein the cover plate (12) covers the end portion of the shell (11) and forms a first surface (124), a protruding portion (121) protruding toward an interior of the shell (11) is formed on the first surface (124), and a second mating surface (122) adapted to abut against the first mating surface (113) is formed on the protruding portion (121); and
an included angle between the second mating surface (122) and the first surface (124) is α2, and α1 and α2 satisfy: α1<90° and α2>90°.

2. The shell assembly (1) according to claim 1, wherein a second end surface (125) is formed on an end surface of the protruding portion (121), and an arc transition surface (123) is formed between the second mating surface (122) and the second end surface (125).

3. The shell assembly (1) according to claim 2, wherein the arc transition surface (123) is tangential to both the second mating surface (122) and the second end surface (125).

4. The shell assembly (1) according to any one of claims 2 and 3, wherein a radius of the arc transition surface (123) is r and satisfies: 0<r≤0.5 mm.

5. The shell assembly (1) according to any one of claims 1 to 4, wherein two sides of the shell (11) in a thickness direction are an inner side surface (114) and an outer side surface (115); and a distance between the inner side surface (114) and the outer side surface (115) is a1; and
a distance between edges on the two sides of the first mating surface (113) in the thickness direction of the shell (11) is a2, and a1 and a2 satisfy: 0<a2/a1≤0.5.

6. The shell assembly (1) according to any one of claims 1 to 5, wherein α1 satisfies: 0°<α1≤75°.

7. The shell assembly (1) according to any one of claims 1 to 6, wherein the first mating surface (113) is in interference fit with the second mating surface (122).

8. The shell assembly (1) according to any one of claims 1 to 7, wherein an interference amount between the first mating surface (113) and the second mating surface (122) is a3 and satisfies: 0 mm<a3≤0.2 mm.

9. The shell assembly (1) according to claim 2, wherein a distance between the second end surface (125) and an end surface of one side, away from the shell (11), of the cover plate (12) is h, a thickness of the protruding portion (121) is h1, and h and h1 satisfy: 0.2≤h1/h≤0.6.

10. The shell assembly (1) according to any one of claims 1 to 9, wherein a wall thickness of the shell (11) is a1 and satisfies: 0.1 mm≤a1≤3 mm.

11. The shell assembly (1) according to any one of claims 1 to 9, wherein the shell (11) is constructed as a cylinder or a polyhedron.

12. The shell assembly (1) according to any one of claims 1 to 11, wherein the shell (11) is wound to define an accommodating cavity (111), a connection area (13) extending in a bus direction is formed on the shell (11), a width of the connection area (13) is d and satisfies: d<0.1 mm.

13. A battery (18), comprising the shell assembly (1) according to any one of claims 1 to 12.

14. A power device (19), comprising the battery (18) according to claim 13.
